# EUROPEAN PATENT APPLICATION

(11) **EP 4 431 727 A1**
(43) Date of publication of application: **18.09.2024**
(21) Application number: 23162400.8
(22) Date of filing: 16.03.2023
(51) Int. Cl.: F03D 13/10, B63B 35/00, B66C 23/18, F03D 13/25, F03D 13/40

(54) **SECURING ARRANGEMENT FOR SECURING SEVERAL WIND TURBINE TOWERS, ADAPTER FOR A SECURING ARRANGEMENT, TOWER ARRANGEMENT, AND METHOD FOR SECURING SEVERAL WIND TURBINE TOWERS**

(71) Applicant: Siemens Gamesa Renewable Energy A/S, 7330 Brande (DK)
(72) Inventor: TÜRK, Ibrahim, 22769 Hamburg (DE)
(74) Representative: SGRE-Association

(57) **Abstract**

Securing arrangement for securing several wind turbine towers (3) being in an erected state and located adjacently to each other, comprising at least one adapter (8) being removably attachable to one of the wind turbine towers (3) and at least one counteracting means (9, 12, 14) being connected or connectable with the adapter (8), wherein, regarding a state of the adapter (8) being attached to the respective wind turbine tower (3) and of the counteracting means (9, 12, 14) being connected with the adapter (8), the counteracting means (9, 12, 14) is adapted to be connected with another wind turbine tower (3) and/or to interact with a further counteracting means (9, 12, 14) being connected with another wind turbine tower (3) such that a relative movement between these wind turbine towers (3) is counteracted by the counteracting means (9, 12, 14) .

## Description

The present invention relates to a securing arrangement for securing several wind turbine towers being in an erected state and located adjacently to each other. The present invention furthermore relates to an adapter for a securing arrangement for securing several wind turbine towers being in an erected state and located adjacently to each other. The present invention also relates to a tower arrangement, comprising several wind turbine towers being in an erected state and located adjacently to each other. Finally, the present invention relates to a method for securing several wind turbine towers being in an erected state and located adjacently to each other.

Regarding the manufacturing of wind turbine towers and/or the subsequent transportation of wind turbine towers to their designated positions, several wind turbine towers are reposed or transported while they are in an erected or upright position and located next to each other. Respective situations occur particularly on the quayside or on a vessel during their offshore transportation.

A problem regarding these situations is caused by vortex induced vibrations. Interactions between the towers and wind can induce vortices which can cause vibrations of the towers. Another effect causing vibrations of the towers is the so called "interference galloping". This effect occurs if towers are placed close together, wherein an aeroelastic coupling between the motion of the towers can cause large vibration amplitudes. These oscillations or relative movements between the towers, respectively, can cause a damage of the towers.

From the European patent application 22 187 698.0, which has not been published yet, a concept to reduce or to avoid such oscillations is known. In this concept, a damping arrangement for counteracting tower oscillations is provided. The damping arrangement comprises a damping means for supressing and/or dampening oscillations, wherein the damping means comprises damping elements which are coupled to the towers.

From CN 209 414 046 U and CN 209 483 859 U a system is known, wherein a damping cable is connected with two towers to suppress a vibration of these towers.

US 2011 / 0 311 360 A1 discloses an offshore wind turbine, wherein two towers are connected with a horizontal tension body.

It is an object of the present invention to provide an enhanced concept regarding the reduction or avoidance of oscillations of a plurality of wind turbine towers.

This object is achieved by an securing arrangement as initially described, wherein the securing arrangement comprises at least one adapter being removably attachable to one of the wind turbine towers and at least one counteracting means being connected or connectable with the adapter, wherein, regarding a state of the adapter being attached to the respective wind turbine tower and of the counteracting means being connected with the adapter, the counteracting means is adapted to be connected with another wind turbine tower, preferably with another adapter being connected with the other wind turbine tower, and/or to interact with a further counteracting means being connected with another wind turbine tower, preferably with another adapter being connected with the other wind turbine tower, such that a relative movement between these wind turbine towers is counteracted by the counteracting means.

The present invention is based on the idea that the adapter is used as a link between the tower and the counteracting means. In many cases it is cumbersome to directly attach the counteracting means to the tower, particularly if the counteracting means being a rope has to be coupled to the tower by strapping or wrapping it around an upper section of the tower. In contrast to this, coupling the tower with the adapter and coupling the adapter with the counteracting means can be executed much easier, particularly since the adapter can comprise respective means adapted to connect the adapter with the tower and the counteracting means with the adapter.

The towers being in an erected state means that, regarding the direction of gravity, they are in an upright, particularly in a vertical, state or condition. In this state, the longitudinal direction of each of the towers can extend along or can be tilted, particularly up to 30°, with respect to the direction of gravity. The towers can have circular cross sections with respect to their longitudinal elongations. The towers can be cylindrical or conical. The towers can have a tower foot, a tower head and an elongated section between the tower foot and the tower head. Hence, the tower foot is a lower section and the tower head an upper section of the respective tower. Regarding the erected state, the tower foot is below the elongated section and the tower head is above the elongated section. The towers, particularly the tower foots, can be arranged in and held upright by a tower frame having several separated sections or compartments.

The adapter is removably attachable to at least one of the towers. Particularly, at least one attaching means of the adapter is provided, which is adapted to connect the adapter with the tower. The attaching means, which particularly is or comprises clamping means or screwing means, can be closed to attach the adapter to the tower and non-destructively opened to detach the adapter from the tower. Particularly, the adapter can be attached to the tower while the tower is not yet in the erected state. The adapter can be attached to the tower while it is in a lying or horizontal position, wherein, subsequently, the tower can be brought into the erected state, e.g., by a crane or the like. Particularly, the adapter can be attached to and detached from the tower while the tower is in the erected state. The adapter can be brought into the designated position on the tower by a lifting means, particularly by a crane or a helicopter.

The counteracting means is, particularly removably, connected or connectable with or attached or attachable to the adapter. Particularly, at least one connecting means of the adapter is provided, which is adapted to connect the adapter with the counteracting means. The connecting means, which particularly is or comprises clamping means or screwing means, can be closed to connect the adapter with the connecting means and non-destructively opened to release the connecting means from the adapter means. Regarding the optional case where the securing arrangement according to the present invention comprises several adapters, the counteracting means can be connected or connectable with each of the adapters, particularly via its both ends. Particularly, the connecting means can be connected with and released from the adapter while the adapter is attached to the tower, particularly being in the lying state or the erected state. The connecting means can be brought into the designated position on the adapter by a lifting means, being particularly a crane or a helicopter.

Regarding the state of the adapter being attached to the tower and of the counteracting means being connected with the adapter and particularly with another wind turbine tower, the relative movement between these towers, which can be caused by vortex induced vibrations and/or interference galloping, can be damped or prohibited by the counteracting means which transfer forces between the respective towers. This force counteracts the current relative movement between these towers. As a consequence, the respective oscillation is averted or at least damped.

Particularly, the counteracting means is adapted to transmit a tensile force between the towers on which this counteracting means is arranged or between the tower on which this counteracted means is arranged and the tower on which the further counteracting means, which interacts with the counteracting means, is arranged. The tensile force acts as an attractive force between these towers and, hence, prevents a relative movement of the towers away from each other.

Additionally or alternatively, the counteracting means can be adapted to transmit a compressing force between the towers on which this counteracting means is arranged or between the tower on which this counteracted means is arranged and the tower on which the further counteracting means, which interacts with the counteracting means, is arranged. The compressive force acts as a repulsive force between these towers and, hence, prevents a relative movement of these towers towards each other.

The counteracting means can be adapted to transmit the tensile force and the compressing force between the respective towers. Particularly, the counteracting means can comprise a rigid structure. The counteracting means can be or comprise a rigid bar or rod for connecting the respective towers with each other. The bar or rod can be connected or connectable with one of the towers on each of its outer ends. The bar or rod can be connected or connectable with one of the towers on its one outer end and with another counteracting means on its other outer end. In this embodiment, the other counteracting means can also be or comprise a respective bar or rod. For connecting the counteracting means with each other, each of these can comprise a coupling means on its free end adapted to connect these counteracting means with each other. The coupling means can be a Scharfenberg coupler.

The counteracting means being adapted to transmit a tensile force can be or can comprise at least one elastic cord- or band-like rope which is connected or connectable with the adapter on its one end and with the other wind turbine tower, particularly with the further counteracting means being attached to the other wind turbine tower, on its other end. The rope can comprise or can be made of an elastic material, e.g., an elastic plastic material. Hence, the tensile force can correlate with an elongation or expansion of the rope. For connecting the rope with the adapter, the rope can comprise a lug on its outer end and the adapter can comprise the connecting means particularly being a respective hook.

The counteracting means can comprise two ropes, wherein each of the ropes is connected or connectable with the adapter on its one end and with the other wind turbine tower, particularly with the further connecting counteracting means being attached to the other wind turbine tower, on its other end such that the ropes are arranged tilted to each other. Having the angle between the ropes allows for counteracting respective movements of the towers regarding several moving directions. The ropes can extend horizontally between the respective towers such that the angle between the ropes is arranged within a horizontal plane. The angle depends on the position of the connecting means or the distance between the connecting means, respectively, being connected with the ropes and the distance between the towers. The angle can be between 10° and 170°, particularly between 60° and 120°, preferably between 80° and 100°.

The counteracting means being adapted to transmit a compressing force can be or can comprise a buffer assembly adapted to interact with the other tower or with the further connecting means, particularly being a further buffer assembly which can be connected with another adapter. The buffer assembly can comprise a buffer housing and a buffer piston. A free end of the buffer piston having a buffer pad arranged thereon can project out from the buffer housing. The width of the buffer pad can be between 10% and 50%, particularly between 20% and 40%, of the diameter of the tower regarding the longitudinal position of the tower where the buffer assembly is arranged.

The buffer assembly can comprise an elastic element which interacts with the buffer housing and the buffer piston such that if the buffer piston is moved out of a zero position, the counteracting force is created by the elastic element. The elastic element can be a spring or a hydraulic or pneumatic damping element of a hydraulic or pneumatic damping device of the respective buffer assembly.

Preferably, several counteracting means being buffer assemblies are provided. The buffer assemblies can be provided pairwise while the buffer assemblies of the respective puffer assembly pair are arranged on several adapters such that their buffer pads are facing towards each other. Regarding one buffer assembly pair and assuming that the wind turbine towers do not perform any relative movements and, hence, being in their zero-positions, the buffer pads can be in contact with each other while the elastic means is particularly pre-tensioned. Alternatively, the buffer pads can have a distance greater than zero to each other such that they get in contact and interact if the respective towers move relatively to each other such that the distance between these towers falls below a respective minimum value.

The buffer assembly can be, regarding a state of the adapter being attached to the wind turbine tower and of the buffer assembly being connected with the adapter, relocatable along a radial direction of the wind turbine tower. The respective radial position of the buffer assembly can be adjusted and fixed with respect to the distance between the wind turbine towers. In this embodiment, the buffer housing can be, particularly telescopically, extendable with respect to a main body of the adapter, particularly of a hollow beam forming the main body of the adapter. Clamping means for fixing the current position of the buffer assembly can be provided.

In a possible embodiment of the securing arrangement according to the present invention, the adapter comprises several connecting means being located on different positions on the adapter, wherein the counteracting means is connected or connectable with the adapter by the connecting means. Depending on the current situation, particularly depending on the tower dimensions, for instance the tower diameter and/or the distance between the towers, the counteracting means can be connected with a certain connecting means. Particularly, the angle between the ropes of the counteracting means can be adjusted by choosing the respective connecting means. Preferably, the connecting means are located on different positions of a cantilever of the adapter. Regarding a state of the adapter being attached to the wind turbine tower, the cantilever can extend along a direction which extends perpendicular to a radial direction of the wind turbine tower.

Assuming that the counteracting means is realized by the buffer assembly, which is particularly relocatable along the radial direction of the wind turbine tower, the connecting means can be realized by screwing holes of the main body of the adapter, particularly of the hollow beam, which are arranged along the radial direction, wherein the buffer housing can be relocatable along the screwing holes. The buffer housing can be attached to the adapter on the respective position by, e.g., screwing means being screwed into the screwing holes.

Preferably, the adapter comprises at least one relocating means, wherein the relocating means is adapted to relocate the or a connecting means which is adapted to connect the counteracting means with the adapter or to relocate a force transmission position on which a force acting on the counteracting means is transferable to the adapter. The relocating means allows for adjusting the position of the connecting means or the force transmission position with respect to different circumstances. Particularly, the respective positions can be adjusted with respect to different tower dimensions, particularly tower diameters, and/or with respect to the current distance between the towers. The relocating means is preferably adapted to fix the current position of the counteracting means.

The adapter can comprise at least one cantilever, wherein the length of the cantilever is changeable by the relocating means, wherein the change of the length of the cantilever causes the relocation of the connecting means or the force transmission position. The cantilever extends along its longitudinal direction and comprises preferably a stationary component and a movable component being movably with respect to the longitudinal direction, wherein the connecting means or the force transmission position can be arranged on the movable component. The connecting means or the force transmission position can be arranged on the outer, free end of the cantilever or the movable component, respectively. The cantilever can comprise a fixing means, particularly a clamping means or a screwing means, to fix the current position of the movable component with respect to the longitudinal direction and, hence, to fix the current length of the cantilever. The relocating means can be realized by the cantilever comprising an, particularly telescopically, extendable rod or bar. In this embodiment, the extendable rod or bar is the movable component.

The cantilever can be connected or interact with a guy being a suspension beam or suspension rope. The guy can be connected with the cantilever on its one end and with a main body of the adapter on its other end. The guy creates a counterforce regarding the force being transferred from the counteracting means to the cantilever to increase its mechanical stability. Particularly, if the force transmission position is arranged on the outer end of the cantilever, the guy can be realized by a lateral end section of the respective counteracting means particularly being a rope. The rope can be guided around a deflection pulley which can be arranged on the outer end of the cantilever.

Regarding a state of the adapter being attached to the wind turbine tower, the cantilever can extend along a direction perpendicular to a radial direction of the wind turbine tower. Particularly in this embodiment, two adjacent cantilevers can be provided which extend into opposite directions. Each of these cantilevers can comprise one connecting means or one force transmission position which are used to connect the ropes of one counteracting means with this adapter.

The adapter can comprise at least one attaching means, wherein the adapter is adapted to be attached to the tower head of the wind turbine tower by the attaching means. Since the tower foot is particularly non-movably arranged in the tower frame, the respective tower head is the section of this tower which undergoes the greatest oscillation amplitudes. Hence, for efficiently counteracting these oscillations, the adapter is preferably arranged on the tower head. The tower head can be defined as the upper part of the respective tower which extend along at most 25%, particularly at most 10%, of the total length of the respective tower.

Preferably, the adapter is adapted to be attached to a tower head flange of the tower head. The tower head flange can be arranged on the upper end of the tower. The tower head flange can point radially inwards. The tower head flange and the adapter, particularly its main body, can comprise several through holes. Bolts can be inserted into the through holes and secured by nuts to attach the adapter to the tower head flange. Several through holes of the adapter can be provided which are, regarding a state of the adapter being attached to the respective wind turbine tower, arranged along the radial direction of the tower such that the adapter is adapted to be connected with towers with different dimensions, particularly diameters.

The tower can be adapted to be connected with a nacelle of the wind turbine via the tower head flange. Hence, once the tower has been brought to its designated or final position, the adapter can be removed from the tower head flange and the nacelle can be attached to the tower head flange. The nacelle typically realizes a machinery house for the generator and other components necessary for converting rotational energy of a rotor of the wind turbine into electrical energy.

The adapter can comprise at least one beam constituting an I- or a T- or an X-like main body of the adapter. Regarding the state of the adapter being connected with the respective wind turbine tower, the I- or T- or X-like structure extends along a direction which extends perpendicular to the longitudinal direction of the respective tower. The beam can consist of a metal, particularly of steel. The, particularly hollow, cross section of the beam con comprise a rectangular shape.

Additionally, the invention relates to an adapter for a securing arrangement for securing several wind turbine towers being in an erected state and located adjacently to each other, wherein the adapter is removably attachable to one of the wind turbine towers, wherein at least one counteracting means is connectable with the adapter, wherein, regarding a state of the adapter being connected with the respective wind turbine tower and of the counteracting means being connected with the adapter, the counteracting means is adapted to be connected with another wind turbine tower and/or to interact with a further counteracting means being connected with another wind turbine tower such that a relative movement between these wind turbine towers is counteracted by the counteracting means. All features and advantages regarding the securing arrangement according to the present invention can be transferred to the adapter according to the present invention and vice versa.

Furthermore, the present invention relates to a tower arrangement, comprising several wind turbine towers being in an erected state and located adjacently to each other and a securing arrangement for securing the wind turbine towers, wherein the securing arrangement comprises at least one adapter being removably attached to one of the wind turbine towers and at least one counteracting means being connected with the adapter, wherein the counteracting means is connected with another wind turbine tower and/or adapted to interact with a further counteracting means being connected with another wind turbine tower such that a relative movement between these wind turbine towers is counteracted by the counteracting means. All features and advantages of the securing arrangement according to the present invention and the adapter according to the present invention can be transferred to the tower arrangement according to the present invention and vice versa.

Preferably, a tower foot of each of the wind turbine towers is arranged in a tower frame having several separated compartments, wherein the tower frame holds the wind turbine towers in the erected state. Regarding a viewing direction along the longitudinal direction of the parallel towers, the wind turbine towers can be arranged in a rectangular or triangular grid structure which is determined by the structure of the compartments. The tower frame can have a structure similar with or equal to a beverage crate.

Finally, the present invention relates to a method for securing several wind turbine towers being in an erected state and located adjacently to each other, wherein at least one adapter is removably attached to one of the wind turbine towers and at least one counteracting means is connected with the adapter, wherein the counteracting means is connected with another wind turbine tower and/or interacts with a further counteracting means which has been connected with another wind turbine tower such that a relative movement between these wind turbine towers is counteracted by the counteracting means. All features and advantages of the securing arrangement according to the present invention, the adapter according to the present invention and the tower arrangement according to the present invention can be transferred to the method according to the present invention and vice versa.

The method according to the present invention can be characterized in that the at least one adapter is removably attached to the respective tower while this tower is in a lying state, wherein, subsequentially, this tower is brought into the erected state. Basically, it is less cumbersome to attach the adapter to the tower while the tower has not yet been into the erected state but is still in the lying or horizontal state. Preferable, the counteracting means is connected with the respective adapter(s) before the tower is brought into the erected state.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a side view of a tower arrangement according to a first embodiment of the present invention arranged on a vessel and comprising a securing arrangement according to a first embodiment of the present invention with several adapters according to a first embodiment of the present invention,
- Fig. 2: a top view of a tower arrangement according to a second embodiment of the present invention comprising a securing arrangement according to a second embodiment of the present invention with several adapters according to a second embodiment of the present invention,
- Fig. 3: a top view of a tower arrangement according to a third embodiment of the present invention comprising a securing arrangement according to a third embodiment of the present invention with several adapters according to a third embodiment of the present invention,
- Fig. 4: a side view of a tower head of one of the towers and one adapter of the tower arrangement of fig. 3,
- Fig. 5: an enlarged view of a section of fig. 4 to illustrate details regarding a cantilever of the respective adapter,
- Fig. 6: the same view as fig. 5 to illustrate a first alternative implementation of the respective adapter,
- Fig. 7: the same view as fig. 5 to illustrate a second alternative implementation of the respective adapter, and
- Fig. 8: a top view on counteracting means 9 and two adapters 8 of a tower arrangement according to another embodiment of the present invention.

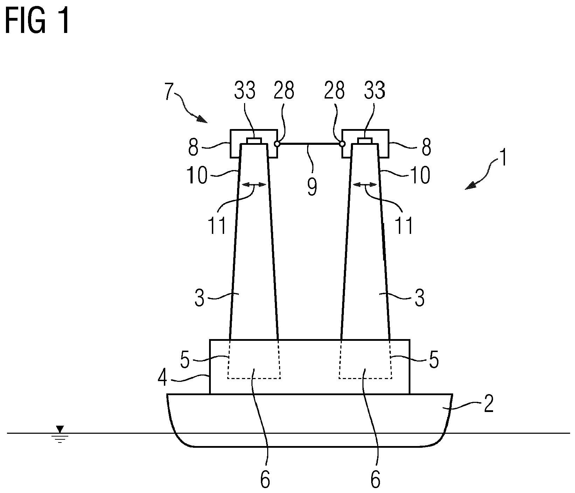

Fig. 1 shows a tower arrangement 1 according to a first embodiment of the present invention from the side, wherein the tower arrangement 1 is located on and transported by a vessel 2. The tower arrangement 1 comprises several, exemplarily two, newly manufactured wind turbine towers 3 which are transported to their designated position in an offshore wind park by the vessel 2. Alternatively, the tower arrangement 1 can be located on a quayside, particularly for reposing or storing purposes.

The towers 3 are arranged in a tower frame 4 which holds the towers 3 in an erected state while they are located adjacently to each other. The tower frame 4 is beverage crate-like, i.e., it comprises several compartments 6, wherein in each of the compartments 6, a tower foot 5 of one of the towers 3 is arranged.

The tower arrangement 1 comprises a securing arrangement 7 according to a first embodiment of the present invention. The securing arrangement 7 comprises several, exemplarily two, adapters 8 according to a first embodiment of the present invention and one counteracting means 9. Each of the adapters 8 is removably attached on a tower head 10 of one of the wind turbine towers 3 by attaching means 33. The counteracting means 9 is connected with one of the adapters 8 on each of its end sections. Due to wind, the towers 3 can oscillate or vibrate which causes a relative movement between the towers 3, wherein these movements are indicated by arrows 11 in fig. 1. The counteracting means 9 counteracts the relative movement between the wind turbine towers 3.

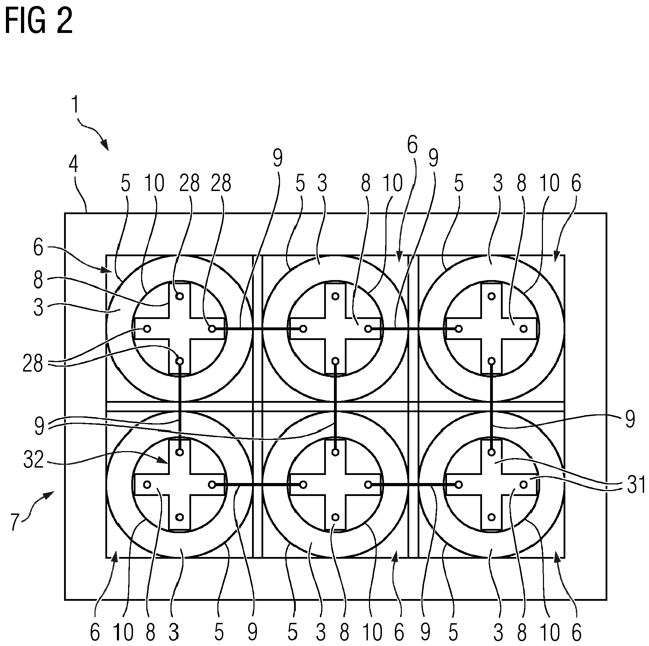

Next, referring to fig. 2, a tower arrangement 1 according to a second embodiment of the present invention is shown from above. In contrast to the embodiment of fig. 1, this tower arrangement 1 comprises six wind turbine towers 3 arranged in a respective tower frame 4. The wind turbine towers 3 are arranged in a rectangular grid structure. However, other grid structures like triangular or the like are possible.

The tower arrangement 1 of fig. 2 also comprises a securing arrangement 7 with several adapters 8 and counteracting means 9. Each of the adapters 8 is removably attached on the tower head 10 of one of the wind turbine towers 3. Each of the counteracting means 9 is connected with one of the adapters 8 on each of its end sections such that two directly adjacent towers 3 are connected by one of the counteracting means 9.

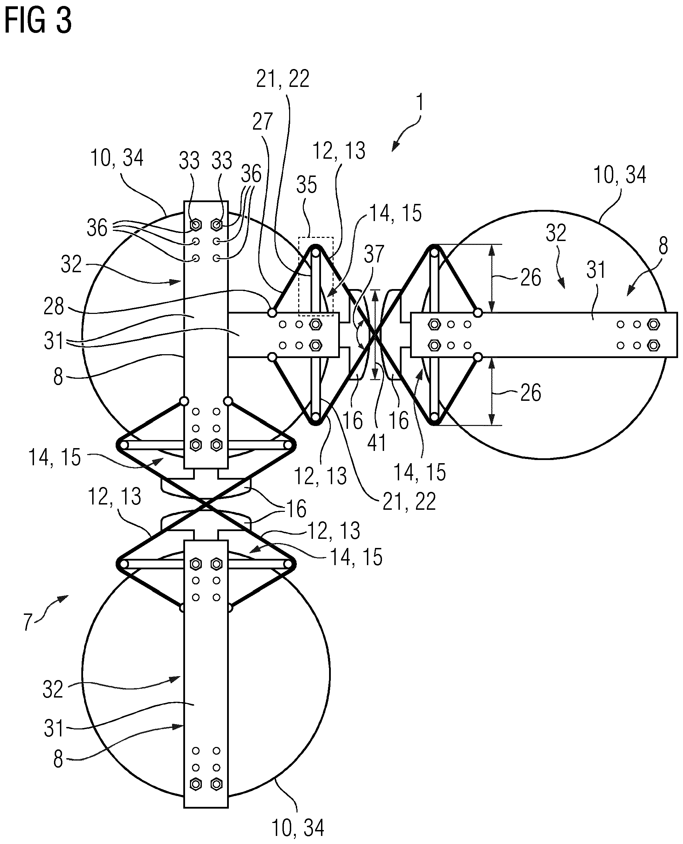

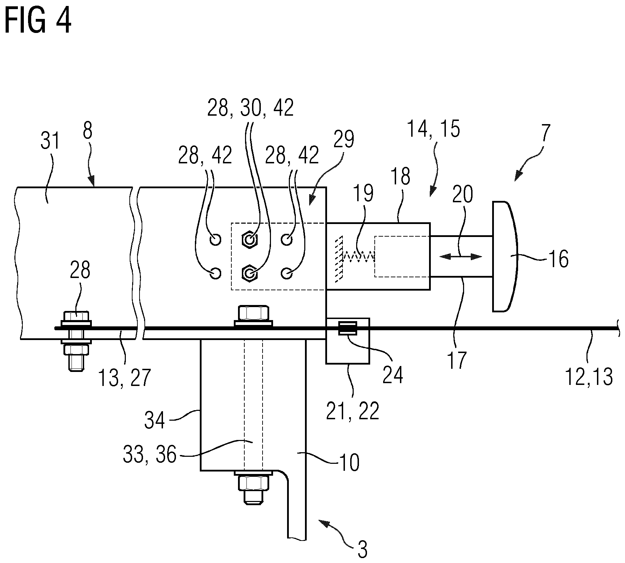

While fig. 1 and 2 show no details regarding details of the adapters 8 and of the counteracting means 9, next it is referred to figures 3 and 4 which show a tower arrangement 1 according to a third embodiment according to the present invention, wherein particularly details regarding the adapters 8 and of the counteracting means 9 are shown and explained. Basically, these details can also be realized in the embodiments of figures 1 and 2. Fig. 3 shows the respective tower arrangement 1 from above comprising three towers 3. Fig. 4 shows a side view on the tower head 10 of the tower 3 shown the top left position in fig. 3. The tower frame 4 is not shown in figures 3 and 4.

Next, details regarding the adapters 8 and the counteracting means 9 are described with the help of figures 3 and 4. First counteracting means 12, each comprising two ropes 13, are adapted to transmit a tensile force between the wind turbine towers 3 which are connected by the respective first counteracting means 12. Second counteracting means 14, each comprising a buffer assembly 15, are adapted to transmit a compressive force between the respective wind turbine towers 3.

Regarding the first counteracting means 12, the ropes 13 exemplarily consist of a plastic material and are elastic and cord- or band-like and particularly pre-tensioned. The ropes 13 are removably connected with one of the adapters 8 on each of its lateral ends. The ropes 13 are connected with the respective adapters 8 such that the ropes 13 are tilted to each other. An angle 37 between the ropes 13 allows for counteracting relative movements of the wind turbine towers 3 within several moving directions.

Regarding the second counteracting means 14, the buffer assembly 15 comprises buffer pads 16. Particularly referring to fig. 4, the buffer pad 16 is arranged on a free, outer end of a buffer piston 17 which projects outwards from a buffer housing 18. The width 41 of the buffer pad 16 is exemplarily about 40% of the diameter of the tower head 10. On the other outer end of the buffer piston 17, an elastic means 19 like a spring or a hydraulic or a pneumatic damping element is provided to counteract the movement of the buffer pad 16 along the longitudinal direction of the buffer piston 17, wherein this movement is indicated by an arrow 20 in fig. 3 and 4.

The buffer assemblies 15 are provided pairwise. That means that the buffer assemblies 15 of each of the buffer assembly pairs are arranged on several adapters 8 such that their buffer pads 16 are facing towards each other. Regarding the zero-position of the towers 3, there is a little distance between these buffer pads 16 such that they get in contact and interact with each other only if the respective towers 3 move towards each other. Alternatively, the buffer pads 16 can be in contact with each other even if the towers 3 are in their zero-position. In this case, the elastic means 19 can be pre-tensioned.

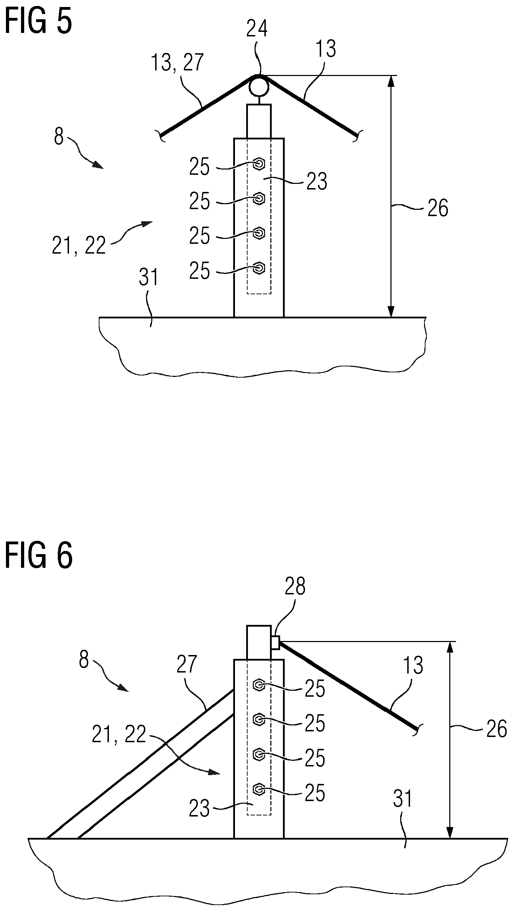

Each of the adapters 8 comprise cantilevers 21 which will be described next. Each of the cantilevers 21 extend along a direction perpendicular to a radial direction of the tower 3 on which the respective adapter 8 is attached. The cantilevers 21 are provided pairwise, wherein the cantilevers 21 of each cantilever pair extend into opposite directions and are used to couple the first counteracting means 12 with the respective adapter 8. Details regarding the cantilevers 21 become apparent with the help of fig. 5 which shows an enlarged view of a section of fig. 4 which is indicated by the dashed box 35.

As can be seen from fig. 3, each of the ropes 13 is connected to the respective adapter by a connecting means 28 which can be realized by a clamping means or a hook-lug-connection. The connecting means 28 is arranged on a main body 32 of the adapter 8. The rope 13 is guided around a free end of the cantilever 21 (see, fig. 5). For this, a deflection pulley is arranged on this end of the cantilever 21 which realizes a force transmission position 24 on which a force acting on the first counteracting means 12 is transferred to the cantilever 21 and, hence to the adapter 8. To improve the mechanical stability of the cantilever 21, it is connected with a guy 27 being a suspension rope which is constituted by a lateral end section of the rope 13.

Each of the cantilevers 21 constitute a first relocating means 22 which is adapted to relocate the respective force transmission position 24. The cantilever 21 comprises a telescopically extendable bar 23 which constitutes a movable component with respect to the remainder of the cantilever 21 which constitutes a stationary component. For fixing the bar 23 at its respective position, screwing means 25, are provided. The length 26 of the cantilever 21 and, hence the angle 37 between the respective ropes 13 is changeable by the first relocating means 22.

Fig. 6 shows the same view on the cantilever 21 as fig. 5 to illustrate a first alternative implementation of the respective adapter 8. In this embodiment, the cantilever 21 which realizes the first relocating means 22 is adapted to relocate the connecting means 28 which is arranged on the outer end of the cantilever 21 or bar 23, respectively. In this embodiment, the guy 27 is realized by a brace which is connected with the main body 32 on its one end and with the cantilever 21 on its other end.

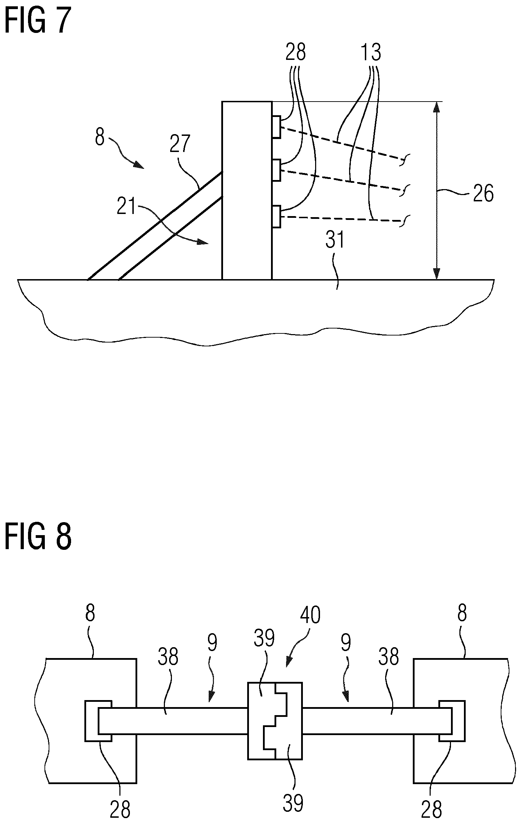

Fig. 7 shows the same view on the cantilever 21 as figures 5 and 6 to illustrate a second alternative implementation of the adapter 8. In this embodiment, the cantilever 21 which has an invariable length 26 does not realize the first relocating means 22 but comprises several connecting means 28 being located on different positions along the longitudinal elongation of the cantilever 21. The rope 13 is connectable with the adapter 8 by each of the connecting means 28 which, similar to the change of the length 26 of the cantilever 21, allows for changing the angle 37. Different states of the rope 13 being connected with different connecting means 28 are indicated by dashed lines in Fig. 7.

Referring to fig. 4 again, the buffer assembly 14 is relocatable along a radial direction of the respective tower 3. For this, the buffer housing 18 extends into a beam 31 of the adapter 8 which constitutes its main body 32. Hence, the buffer housing 18 is telescopically extendable with respect to the main body 31. Regarding the buffer assembly 14, several connecting means 28 are realized by pairs of screwing holes 42 of the main body 32 which are arranged along the radial direction. The buffer housing 18 can be attached to the adapter on the respective position by, e.g., a pair of screwing means 30 being screwed into respective screwing holes 42 and into screwing holes of the buffer housing 18. Instead of the screwing holes 42, the adapter can comprise clamping means for fixing the current position of the buffer assembly 14. Hence, depending on the distance between the wind turbine towers 3, the buffer assembly 14 can be brought into a designated position to be able to interact with the other buffer assembly 14 of the respective buffer assembly pair.

Next, another possible embodiment of the invention regarding the concrete realization of the counteracting means 9 will be described with the help of fig. 8. In this figure, the counteracting means 9 and the adapters 8 are shown from above, wherein the towers 3 are not shown in this figure. In this embodiment, the counteracting means 9 are adapted to transmit a tensile force as well as a compressing force between the respective towers 3. These counteracting means 9 comprise a rigid structure which is realized by a rigid rod 38 for connecting the respective towers 3 with each other. The rod 38 can be removably connected with one of the towers 3 on each of its outer ends. In contrast to this and as it is shown in fig. 8, the rod 38 can be connected with one of the adapters 8 or towers 3, respectively on its one outer end and with the rod 38 of another counteracting means 9 according to this embodiment on its other outer end. For connecting these counteracting means 9, each of the rods 38 comprise a coupling means 39 on its free end which is adapted to connect the respective counteracting means 9 with each other. Exemplarily, the coupling means 39 constitute a Scharfenberg coupler 40. Since the rods 38 are rigid, these counteracting means 9 keep the distance between the respective towers 3 constant.

Next, details regarding the concrete structure of the adapter 8 will be described. Each of the adapters 8 can comprises one or several beams 31 to realize the I- or a T- or an X-like main body 32 of the adapter. An I-like main body 32 is realized for the adapters 8 shown in fig. 3 on the bottom left and the top right position. A T-like main body 32 of the adapter 8 is realized for the adapter 8 shown in fig. 3 on the top left position. X-like main bodies 32 are realized for all adapters 8 shown in fig. 2.

Next, details regarding the attaching means 33 will be described with the help of figures 3 and 4, wherein these aspects can also be realized for the other embodiments. As it has already been mentioned, the adapters 8 are removably connectable with the respective tower head 10 by the attaching means 33. Each of the adapters 8 is adapted to be attached to a tower head flange 34 which is arranged on the respective tower head 10 and which points radially inwards. The tower head flange 34 and the adapter 8, namely its main body 32, comprise several through holes 36. The attaching means 33 are realized by bolts and nuts, wherein the bolts extend through the through holes 36 of the tower head flange 34 and a wall of the main body 32 (see fig. 4). As can be seen from fig. 3, several through holes 36 of the main body 32 are arranged along the radial direction of the respective wind turbine tower 3 and the longitudinal direction of the bar 31 such that the adapter 8 is adapted to be connected with tower head flanges 34 with different diameters.

Finally, a method according to an embodiment of the present invention will be described. For this method, several wind turbine towers, e.g., the three wind turbine towers 3 of fig. 3, are provided in a lying state. Concretely, these towers 3 are arranged in a horizontal position on the respective construction site. Next, particularly by using a crane or another suitable hoisting means, each of the adapters 8 is arranged on one of the tower head flanges 34. Subsequently, each of the adapters 8 is attached to the respective tower 3 by the attaching means 33. Next, the first counteracting means 12, i.e., the ropes 13 are attached to the respective adapters 8. The second counteracting means 14 have been already arranged on the adapters 8 before they have been attached to the towers 3. The second counteracting means 14, i.e., the buffer assemblies 15, are brought into their designated position by the screwing means 30 as it has been described above.

Next, each of the towers 3 is attached to a hoisting means, e.g., a crane, and brought from the lying into the erected state. In course of this, the towers 3 are arranged in the tower frame 4. After this, the respective tower arrangement 1 is transported to the designated position of the towers 3, e.g., by the vessel 2, to an offshore wind park. Finally, the adapters 8 are removed from the towers 3 together with the counteracting means 12, 14 and the towers 3 can be hoisted to their final positions, e.g., to floating tower supports or the like. After the towers 3 have been arranged on their final positions, a nacelle is attached to each of the tower head flanges 34 and the respective wind turbines are further completed.

Although the present invention has been described in detail with reference to the preferred embodiment, the present invention is not limited by the disclosed examples from which the skilled person is able to derive other variations without departing from the scope of the invention.

Independent of the grammatical term usage, individuals with male, female or other gender identities are included within the term.

## Claims

1. Securing arrangement for securing several wind turbine towers (3) being in an erected state and located adjacently to each other, comprising at least one adapter (8) being removably attachable to one of the wind turbine towers (3) and at least one counteracting means (9, 12, 14) being connected or connectable with the adapter (8), wherein, regarding a state of the adapter (8) being attached to the respective wind turbine tower (3) and of the counteracting means (9, 12, 14) being connected with the adapter (8), the counteracting means (9, 12, 14) is adapted to be connected with another wind turbine tower (3) and/or to interact with a further counteracting means (9, 12, 14) being connected with another wind turbine tower (3) such that a relative movement between these wind turbine towers (3) is counteracted by the counteracting means (9, 12, 14).

2. Securing arrangement according to claim 1, **characterized in that** the counteracting means (9, 12) being adapted to transmit a tensile force is or comprises at least one elastic cord- or band-like rope (13) which is connected or connectable with the adapter (8) on its one end and with the other wind turbine tower (3) on its other end.

3. Securing arrangement according to claim 2, **characterized in that** the counteracting means (9, 12) comprises two ropes (13), wherein each of the ropes (13) is connected or connectable with the adapter (8) on its one end and with the other wind turbine tower (3) on its other end such that the ropes (13) are arranged tilted to each other.

4. Securing arrangement according to one of the preceding claims, **characterized in that** the counteracting means (9, 14) being adapted to transmit a compressing force is or comprises a buffer assembly (15) adapted to interact with the other wind turbine tower (3) or with the further counteracting means (9, 14), particularly being a further buffer assembly (15) .

5. Securing arrangement according to claim 4, **characterized in that** the buffer assembly (15) is, regarding a state of the adapter (8) being attached to the wind turbine tower (3) and of the buffer assembly (15) being connected with the adapter (4), relocatable along a radial direction of the wind turbine tower (3).

6. Securing arrangement according to one of the preceding claims, **characterized in that** the adapter (8) comprises several connecting means (28) being located on different positions on the adapter (8), particularly on different positions of a cantilever (21) of the adapter, wherein the counteracting means (9, 12, 14) is connected or connectable with the adapter (8) by the connecting means (28).

7. Securing arrangement according to one of the preceding claims, **characterized in that** the adapter (8) comprises at least one relocating means (22, 29), wherein the relocating means (22, 29) is adapted to relocate the or a connecting means (28) which is adapted to connect the counteracting means (9, 12, 14) with the adapter (8) or to relocate a force transmission position (24) on which a force acting on the counteracting means (9, 12, 14) is transferable to the adapter (8).

8. Securing arrangement according to claim 7, **characterized in that** the adapter (8) comprises at least one cantilever (21), wherein the length of the cantilever (21) is changeable by the relocating means (22), wherein the change of the length of the cantilever (21) causes the relocation of the connecting means (28) or the force transmission position (24), wherein the relocating means (22) is particularly realized by the cantilever (21) comprising an extendable rod or bar (23).

9. Securing arrangement according to one of the preceding claims, **characterized in that** the adapter (8) comprises at least one attaching means (33), wherein the adapter (8) is adapted to be attached to a tower head (10) of the wind turbine tower (3), particularly to a tower head flange (34) of the tower head (10), by the attaching means (33).

10. Securing arrangement according to one of the preceding claims, **characterized in that** the adapter (8) comprises at least one beam (31) forming an I- or a T- or an X-like main body (32) of the adapter (8).

11. Adapter for a securing arrangement (7) for securing several wind turbine towers (3) being in an erected state and located adjacently to each other, wherein the adapter (8) is removably attachable to one of the wind turbine towers (3), wherein at least one counteracting means (9, 12, 14) is connectable with the adapter (8), wherein, regarding a state of the adapter (8) being connected with the respective wind turbine tower (3) and of the counteracting means (9, 12, 14) being connected with the adapter (8), the counteracting means (9, 12, 14) is adapted to be connected with another wind turbine tower (3) and/or to interact with a further counteracting means (9, 12, 14) being connected with another wind turbine tower (3) such that a relative movement between these wind turbine towers (3) is counteracted by the counteracting means (9, 12, 14).

12. Tower arrangement, comprising several wind turbine towers (3) being in an erected state and located adjacently to each other and a securing arrangement (7) for securing the wind turbine towers (3), wherein the securing arrangement (7) comprises at least one adapter (8) being removably attached to one of the wind turbine towers (3) and at least one counteracting means (9, 12, 14) being connected with the adapter (8), wherein the counteracting means (9, 12, 14) is connected with another wind turbine tower (3) and/or adapted to interact with a further counteracting means (9, 12, 14) being connected with another wind turbine tower (3) such that a relative movement between these wind turbine towers (3) is counteracted by the counteracting means (9, 12, 14).

13. Tower arrangement according to claim 12, **characterized in that** a tower foot (5) of each of the wind turbine towers (3) is arranged in a tower frame (4) having several separated compartments (6), wherein the tower frame (4) holds the wind turbine towers (3) in the erected state.

14. Method for securing several wind turbine towers (3) being in an erected state and located adjacently to each other, wherein at least one adapter (8) is removably attached to one of the wind turbine towers (3) and at least one counteracting means (9, 12, 14) is connected with the adapter (8), wherein the counteracting means (9, 12, 14) is connected with another wind turbine tower (3) and/or interacts with a further counteracting means (9, 12, 14) which has been connected with another wind turbine tower (3) such that a relative movement between these wind turbine towers (3) is counteracted by the counteracting means (9, 12, 14).

15. Method according to claim 14, **characterized in that** the at least one adapter (8) is removably attached to the respective tower (3) while this tower (3) is in a lying state, wherein, subsequently, this tower (3) is brought into the erected state.
